# EUROPEAN PATENT SPECIFICATION

(11) **EP 4 295 102 B1**
(45) Date of publication and mention of the grant of the patent: **17.12.2025**
(21) Application number: 22756639.5
(22) Date of filing: 11.02.2022
(51) Int. Cl.: F41H 11/02, B64D 1/02, F42B 5/15, F42B 12/70, G01P 15/00, G05B 23/00, H04B 17/00, F41F 7/00, F42B 12/36, F42B 39/26, G01P 15/08, G05B 23/02, B64D 7/00

(54) **METHOD AND SYSTEM FOR DISPENSING DETECTION OF A PYROTECHNICAL COUNTERMEASURE**
VERFAHREN UND SYSTEM ZUR AUSGABEERKENNUNG EINER PYROTECHNISCHEN GEGENMASSNAHME
PROCÉDÉ ET SYSTÈME DE DÉTECTION DE LA DISTRIBUTION D'UNE CONTRE-MESURE PYROTECHNIQUE

(30) Priority: 16.02.2021 SE 2100024
(43) Date of publication of application: 27.12.2023
(73) Proprietor: SAAB AB, 581 88 Linköping (SE)
(72) Inventor: STRIHAGEN, Karl, 162 46 Vällingby (SE); SWANEPOEL, Albert, 165 71 Hässelby (SE)
(74) Representative: Zacco Sweden AB
(86) International application number: PCT/SE2022/050146
(87) International publication number: WO 2022/177492

(56) References cited:
- WO-A1-2020/183454
- WO-A1-2020/246931
- CN-B- 101 118 140
- DE-A1- 102018 213 179
- GB-A- 2 470 626
- GB-A- 2 472 077
- KR-A- 20150 145 625
- RU-C1- 2 495 366
- US-A- 4 301 709
- US-A1- 2006 086 277
- US-A1- 2014 138 474
- US-A1- 2015 331 417

## Description

### TECHNICAL FIELD

The disclosure relates to a pyrotechnical countermeasure dispenser system and a method for dispensing detection of a pyrotechnical countermeasure in a pyrotechnical countermeasure dispenser system. The pyrotechnical countermeasure dispenser system comprises a pyrotechnical countermeasure dispenser, at least one pyrotechnical countermeasure cartridge arranged to be fitted in the pyrotechnical countermeasure dispenser, and a pyrotechnical countermeasure dispenser control unit configured for controlling the dispensing of the pyrotechnical countermeasure from the pyrotechnical countermeasure cartridge.

### BACKGROUND ART

Pyrotechnical countermeasure dispensing systems for deploying countermeasures such as chaff and flares in response to threats directed towards a mobile platform equipped with such a pyrotechnical countermeasure dispensing systems. Examples of such systems can for instance be found in US 2015/0331417 A1 or US 4,313,379. Another example is disclosed in GB 2472077 A, which discloses a countermeasure cartridge with a programmable squib which communicates with a controller. If after a firing command the squib still sends signals to the controller, a misfire event can be detected based on this communication.

The pyrotechnical countermeasure is dispensed from a pyrotechnical countermeasure cartridge arranged in the pyrotechnical countermeasure dispenser by means of a squib charge that is set off by means of a dispensing command initiated by a pilot of the mobile platform or by an automatic command upon detection and assessment of an incoming threat. For each pyrotechnical countermeasure cartridge, a bridgewire is connected to a squib. Upon initiation of a dispensing command, current is run through the bridgewire that heats the bridgewire to a high temperature. This starts an exothermic chemical reaction of an attached pyrotechnic composition that in turn sets of the squib, dispensing the contents of the pyrotechnical countermeasure cartridge, e.g. chaff or flare.

One problem that can arise in a pyrotechnical countermeasure dispenser is a misfire of a pyrotechnical countermeasure cartridge meaning that dispensing does not occur, even though a dispensing command has been issued. Today, a dispensing current is measured through the bridgewire and dispensing is deemed successful is a dispensing current has been properly detected. This is however not always the case as the squib may not detonate even though the bridgewire has ignited in a desired way. A misfire causes a number of problems, such as a pilot incorrectly believing that pyrotechnical countermeasure has been dispensed.

There is thus a need for an improved detection of misfire in pyrotechnical countermeasure dispenser systems.

### SUMMARY

An objective of this disclosure is to provide a method for dispensing detection of a pyrotechnical countermeasure in a pyrotechnical countermeasure dispenser system and a pyrotechnical countermeasure dispenser system that addresses the problems described above. This object is achieved by the technical features contained in the characterizing portion of independent claims 1 and 5. The dependent claims contain advantageous embodiments, further developments and variants of the method and system.

The disclosure relates to a method for dispensing detection of a pyrotechnical countermeasure in a pyrotechnical countermeasure dispenser system. The pyrotechnical countermeasure dispenser system comprises a pyrotechnical countermeasure dispenser, at least one pyrotechnical countermeasure cartridge arranged to be fitted in the pyrotechnical countermeasure dispenser, and a pyrotechnical countermeasure dispenser control unit configured for controlling the dispensing of the pyrotechnical countermeasure from the pyrotechnical countermeasure cartridge. The method comprises:
- providing the pyrotechnical countermeasure dispenser control unit with a recoil-sensing device,
   wherein upon activation of a pyrotechnical countermeasure dispensing command,
- monitoring the sensing of a recoil signal from the recoil-sensing device during a monitoring window,
- determining that a dispensing of the pyrotechnical countermeasure from the pyrotechnical countermeasure cartridge has occurred upon detection of the recoil signal exceeding a recoil detection threshold value during the monitoring window,
- determining that a misfire of the pyrotechnical countermeasure has occurred upon no detection of the recoil signal during the monitoring window.

By adding a recoil-sensing device to the electronic circuitry of the pyrotechnical countermeasure dispenser, i.e. to a pyrotechnical countermeasure dispenser control unit, it is possible to monitor the presence or absence of a recoil signal generated by the recoil-sensing device during a period of time, i.e. a monitoring window, after a pyrotechnical countermeasure dispensing command is generated to dispense the pyrotechnical countermeasure. This allows for an improved detection of if a pyrotechnical countermeasure has been dispensed or not compared to today's methods.

When a pyrotechnical countermeasure dispensing command is generated, a dispensing current through a bridgewire connected to a squib charge in the pyrotechnical countermeasure cartridge is measured. Previously, the detection of a dispensing current was deemed enough to indicate a successful dispensing of the pyrotechnical countermeasure. However, as described above, this is not always the case. By supplementing the dispensing current detection with the detection of a recoil signal from a recoil-sensing device in the pyrotechnical countermeasure dispenser control unit, a more certain detection of fire or misfire of the pyrotechnical countermeasure can be made. If the recoil signal exceeds a recoil detection threshold value during the monitoring window, a successful dispensing is assumed. If there is no detection of the recoil signal during the monitoring window period, even if the dispensing current was detected as expected, a misfire is declared.

Further advantages are that in the case of an anomaly in the detection of the dispensing current with a subsequent detection of a recoil signal by the recoil-sensing device can initiate a misfire compensation (if so wished or required) much earlier than is possible with the current implementation.

The pyrotechnical countermeasure dispenser system may be arranged in a platform, wherein the method comprises:
- measuring a noise signal value of a background noise signal from the platform,
- adjusting the recoil detection threshold value to a predetermined value above the noise signal value of the background noise signal from the platform.

If the pyrotechnical countermeasure dispenser system is arranged in a platform, background noise signals in the recoil-sensing device will be present, for instance from vibrations from the platform. A recoil signal level of the recoil signal detected by the recoil-sensing device in the monitoring window is normally greater than a noise signal level generated by platform vibrations. In order to always make sure that the background noise signal does not cause any recoil signal detection issues, the noise signal value of the background noise signal from the platform is continuously or intermittently measured and the recoil detection threshold value is adjusted to a predetermined value above the noise signal value of the background noise signal from the platform. In this way, should the noise signal value approach the recoil detection threshold value, the recoil detection threshold value is adjusted such that the background noise signal value itself cannot be mistaken for a recoil signal.

The method may comprise:
- preventing a subsequent dispensing of a further pyrotechnical countermeasure from the pyrotechnical countermeasure dispenser until a recoil signal exceeding a recoil detection threshold value is detected.

The dispensing detection can also serve as a safety enhancing mechanism to inhibit simultaneous dispensing within the sensing window period, up to the point the impulse is detected before allowing subsequent dispensing to be allowed.

The method may comprise:
- measuring vibrations continuously with the recoil-sensing device to monitor the health status of the pyrotechnical countermeasure dispenser and other platform systems.

Monitoring the health status of both the pyrotechnical countermeasure dispenser and a mounting interface to the platform can be performed by continuously monitoring the vibration levels during flight and usage. When abnormal vibration frequencies start to become evident, this can be used as an early indicator to service or replace parts even on platform level. This can hugely benefit platforms that does not have a vibration monitoring Health and Usage Monitoring System (HUMS). On-condition servicing will greatly improve the availability of the equipment.

The disclosure further relates to a pyrotechnical countermeasure dispenser system comprising a pyrotechnical countermeasure dispenser, at least one pyrotechnical countermeasure cartridge arranged to be fitted in the pyrotechnical countermeasure dispenser, and a pyrotechnical countermeasure dispenser control unit configured for controlling the dispensing of the pyrotechnical countermeasure from the pyrotechnical countermeasure cartridge. The dispenser control unit further comprises a recoil-sensing device. The dispenser control unit upon activation of a pyrotechnical countermeasure dispensing command is configured for monitoring the sensing of a recoil signal from the recoil-sensing device during a monitoring window, determining that dispensing of the pyrotechnical countermeasure has occurred upon detection of the recoil signal exceeding a recoil detection threshold value during the monitoring window, and determining that a misfire of the pyrotechnical countermeasure has occurred if no detection of the recoil signal is made during the monitoring window.

The advantages for the system are the same as described for the method above.

The recoil-sensing device may be a load cell or a three-axis accelerometer.

These alternatives are inexpensive and easy to implement in the pyrotechnical countermeasure dispenser control unit.

The dispenser control unit may comprise two or more recoil-sensing devices.

In order to obtain redundancy or to increase accuracy in detection, more than one recoil-sensing device may be used. In case more than one recoil-sensing device is used, they do not have be of the same type. I.e., one recoil- sensing device can be a load cell and one recoil-sensing device can be a three-axis accelerometer.

The pyrotechnical countermeasure dispenser system may be arranged in a platform, wherein the dispenser control unit may be configured for:
- measuring a noise signal value of a background noise signal from the platform,
- adjusting the recoil detection threshold value to a predetermined value above the noise signal value of the background noise signal from the platform.

The advantages for the system are the same as described for the method above.

The dispenser control unit may be configured for
- preventing a subsequent dispensing of a further pyrotechnical countermeasure from the pyrotechnical countermeasure dispenser until a recoil signal exceeding a recoil detection threshold value is detected.

The advantages for the system are the same as described for the method above.

The dispenser control unit may be configured for
- measuring vibrations continuously with the recoil-sensing device to monitor the health status of the pyrotechnical countermeasure dispenser and other platform systems.

The advantages for the system are the same as described for the method above.

The disclosure further comprises a platform comprising a pyrotechnical countermeasure dispenser system according to the above description.

The platform may be an aircraft such as an airplane or a helicopter.

### BRIEF DESCRIPTION OF THE DRAWINGS

Figure 1 schematically shows a pyrotechnical countermeasure dispenser system according to the disclosure,
Figures 2a-2c schematically show a sequence of recoil detection from firing a pyrotechnical countermeasure where a recoil signal is detected,
Figures 3a-3c schematically show a sequence of recoil detection from firing a pyrotechnical countermeasure where a recoil signal is not detected.

### DETAILED DESCRIPTION

As used herein, a platform is generally intended to refer to a mobile platform such as an aircraft. Examples of aircraft are airplanes or helicopters. Mobile platforms may also refer to land or sea based mobile platforms such as land vehicles and watercraft such as ships and boats. The mobile platform may be manned or unmanned.

The pyrotechnical countermeasure dispenser system is arranged to prevent damage from threats directed towards the mobile platform. These threats include tube-dispensed, optically tracked, wire-guided missiles (TOWs), rocket propelled grenades (RPGs), shoulder-dispensed surface-to-air missiles (SAMs), man-portable air-defence systems (MANPADS or MPADS) and similar aerial weapons.

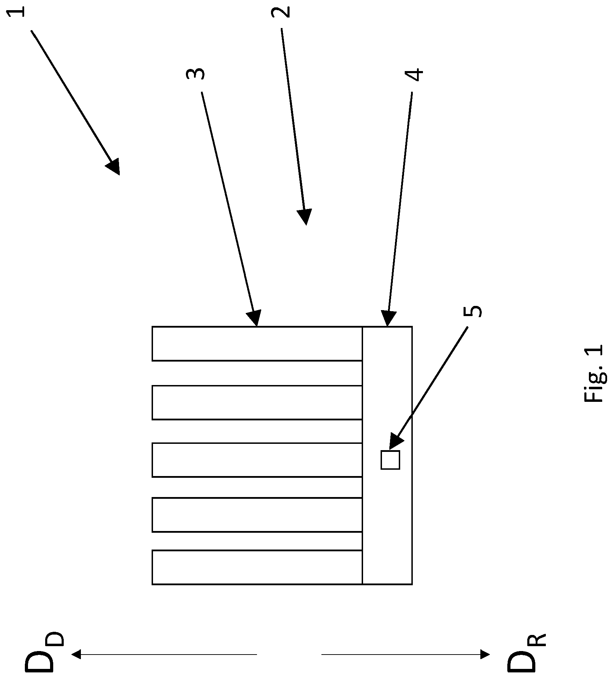

Figure 1 schematically shows a pyrotechnical countermeasure dispenser system 1 according to the disclosure. The pyrotechnical countermeasure dispenser system 1 comprises a pyrotechnical countermeasure dispenser 2, at least one pyrotechnical countermeasure cartridge 3 arranged to be fitted in the pyrotechnical countermeasure dispenser 2, and a pyrotechnical countermeasure dispenser control unit 4 configured for controlling the dispensing of the pyrotechnical countermeasure from the pyrotechnical countermeasure cartridge 3. In the example shown in figure 1, the pyrotechnical countermeasure dispenser 2 comprises five different pyrotechnical countermeasure cartridges 3, each arranged to be fitted with chaff or flare expendables. The pyrotechnical countermeasure dispenser 2 with the pyrotechnical countermeasure cartridges 3 is mounted on the pyrotechnical countermeasure dispenser control unit 4 as is known in the art today.

The pyrotechnical countermeasure cartridges 3 are operated in the same way as is known today by means of igniting a squib charge connected to a bridgewire. When dispensing of a pyrotechnical countermeasure cartridge 3 is initiated, the current through the bridgewire is measured to detect if dispensing of the pyrotechnical countermeasure cartridge 3 has taken place. The method and system of the disclosure are intended to complement this known technology to improve detection accuracy and reliability. The workings of pyrotechnical countermeasure cartridges 3 will not be described in more detail.

The pyrotechnical countermeasure dispenser control unit 4 is a printed circuit board (PCB) comprising all the necessary circuitry required to operate the pyrotechnical countermeasure dispenser 2 and to communicate with a platform control unit of a platform onto which it is installed. On the pyrotechnical countermeasure dispenser control unit 4, a recoil-sensing device is installed in order to detect the dispensing of pyrotechnic countermeasures. Necessary adaptations are made to the pyrotechnical countermeasure dispenser control unit 4 such that the recoil-sensing device can send and/or receive information to/from the platform control unit. Such adaptations include providing a fitting for the recoil-sensing device and etching conductive traces to control interfaces on the pyrotechnical countermeasure dispenser control unit 4. These adaptations are well known in the art and will not be described in detail here.

As is shown in figure 1, the pyrotechnical countermeasure cartridges 3 are arranged such that they dispense their content in a dispensing direction D_{D}. When a pyrotechnical countermeasure is dispensed, a recoil force acting in a recoil direction D_{R}, essentially in the opposite direction of the dispensing direction D_{D}, is exerted on the platform and thereby on the pyrotechnical countermeasure dispenser control unit 4. As the recoil-sensing device is arranged on the pyrotechnical countermeasure dispenser control unit 4, a recoil signal can be detected by the recoil-sensing device when the pyrotechnical countermeasure is dispensed successfully.

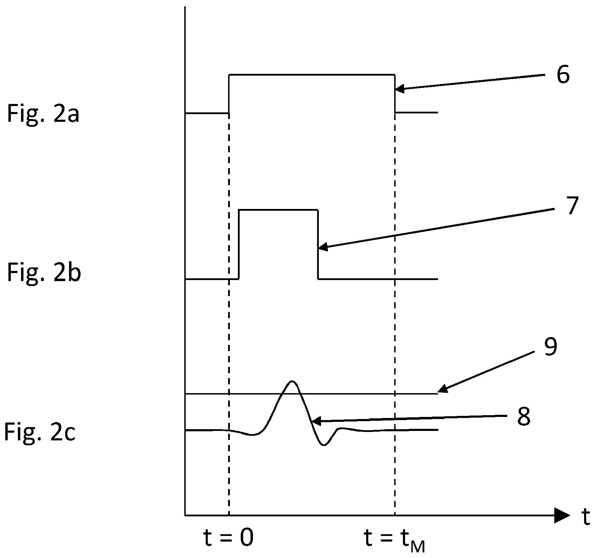

Figures 2a-2c schematically show a sequence of recoil detection from firing a pyrotechnical countermeasure where a recoil signal is detected. In figures 2a-2c, a monitoring window 6, a firing pulse 7 and a recoil signal 8 are shown in the same chart, with time t on the x-axis.

Figure 2a schematically show a monitoring window 6. The length t_{M} of the monitoring window 6 is approximately between 100 and 300 milliseconds, specifically between 150 and 250 milliseconds, more specifically approximately 200 milliseconds. The monitoring starts upon activation of a pyrotechnical countermeasure dispensing command.

Figure 2b schematically shows a firing pulse 7 originating from the activation of a pyrotechnical countermeasure dispensing command and occurs at a slight delay from the start of the monitoring. The firing pulse 7 activates the squib charge through the bridgewire.

Figure 2c schematically shows a recoil signal 8 as measured by the recoil-sensing device. As is schematically shown, a recoil detection threshold value 9 is set above a noise signal value (not shown) in order to prevent misdetections due to vibrations from the platform. As mentioned above, the recoil detection threshold value 9 can be dynamically adjusted to adapt for differences in vibrations of the platform over time. The recoil signal 8 exceeds the recoil detection threshold value 9 during the monitoring window 6 indicating that the pyrotechnical countermeasure has been dispensed properly.

The dashed lines schematically show the start at t = 0 and the end at t = t_{M} of the monitoring window 6 in relation to both the firing pulse 7 and the recoil signal 8. As is shown, a recoil signal 8 is detected within the monitoring window 6. As is already known, the current through the bridgewire is measured and the combination of the measurement of current through the bridgewire and the measurement of a recoil signal 8 exceeding the recoil detection threshold value 9 is used to detect a successful dispensing of pyrotechnical countermeasure.

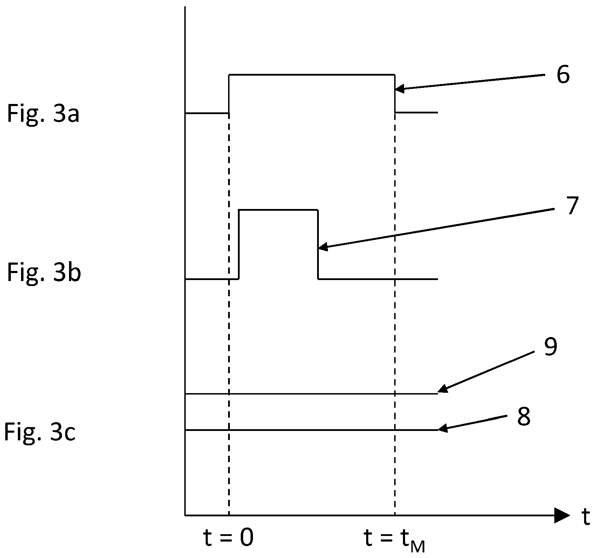

Figures 3a-3c schematically show a sequence of recoil detection from firing a pyrotechnical countermeasure where a recoil signal is not detected. In figures 3a-3c, a monitoring window 6, a firing pulse 7 and a recoil signal 8 are shown in the same chart, with time t on the x-axis in the same way as in figures 2a-2c.

Figure 3a schematically show a monitoring window 6. The length t_{M} of the monitoring window 6 is approximately between 100 and 300 milliseconds, specifically between 150 and 250 milliseconds, more specifically approximately 200 milliseconds. The monitoring starts upon activation of a pyrotechnical countermeasure dispensing command.

Figure 3b schematically shows a firing pulse 7 originating from the activation of a pyrotechnical countermeasure dispensing command and occurs at a slight delay from the start of the monitoring. The firing pulse 7 activates the squib charge through the bridgewire.

Figure 3c schematically shows a recoil signal 8 as measured by the recoil-sensing device. As is schematically shown, a recoil detection threshold value 9 is set above a noise signal value (not shown) in order to prevent misdetections due to vibrations from the platform. As mentioned above, the recoil detection threshold value 9 can be dynamically adjusted to adapt for differences in vibrations of the platform over time.

The dashed lines schematically show the start at t = 0 and the end at t = t_{M} of the monitoring window 6 in relation to both the firing pulse 7 and the recoil signal 8. As is shown, a recoil signal 8 is not detected within the monitoring window 6. For simplicity, the recoil signal is made flat. This can for instance be made by using filters to remove the noise that would otherwise cause the signal to vary over time. In this case, a dispensing current through the bridgewire is measured and the lack of a measurement of a recoil signal 8 exceeding the recoil detection threshold value 9 is used to detect a misfire of pyrotechnical countermeasure.

As will be realised, the invention is capable of modification in various obvious respects, all without departing from the scope of the appended claims. Accordingly, the drawings and the description are to be regarded as illustrative in nature, and not restrictive.

## Claims

1. Method for dispensing detection of a pyrotechnical countermeasure in a pyrotechnical countermeasure dispenser system (1), wherein the pyrotechnical countermeasure dispenser system (1) comprises a pyrotechnical countermeasure dispenser (2), at least one pyrotechnical countermeasure cartridge (3) arranged to be fitted in the pyrotechnical countermeasure dispenser (2), and a pyrotechnical countermeasure dispenser control unit (4) configured for controlling the dispensing of the pyrotechnical countermeasure from the pyrotechnical countermeasure cartridge (3), wherein the method comprises:
- providing the pyrotechnical countermeasure dispenser control unit (4) with a recoil-sensing device (5),
wherein upon activation of a pyrotechnical countermeasure dispensing command,
- monitoring the sensing of a recoil signal (8) from the recoil-sensing device (5) during a monitoring window (6),
- determining that a dispensing of the pyrotechnical countermeasure from the pyrotechnical countermeasure cartridge (3) has occurred upon detection of the recoil signal (8) exceeding a recoil detection threshold value (9) during the monitoring window (6),
- determining that a misfire of the pyrotechnical countermeasure has occurred upon no detection of the recoil signal (8) during the monitoring window (6).

2. Method according to claim 1, wherein the pyrotechnical countermeasure dispenser system (1) is arranged in a platform, wherein the method comprises:
- measuring a noise signal value of a background noise signal from the platform,
- adjusting the recoil detection threshold value (9) to a predetermined value above the noise signal value of the background noise signal from the platform.

3. Method according to claim 1 or 2, wherein the method comprises:
- preventing a subsequent dispensing of a further pyrotechnical countermeasure from the pyrotechnical countermeasure dispenser (2) until a recoil signal (8) exceeding a recoil detection threshold value (9) is detected.

4. Method according to any one of the preceding claims, wherein the method comprises:
- measuring vibrations continuously with the recoil-sensing device (5) to monitor the health status of the pyrotechnical countermeasure dispenser (2) and other platform systems.

5. Pyrotechnical countermeasure dispenser system (1) comprising a pyrotechnical countermeasure dispenser (2), at least one pyrotechnical countermeasure cartridge (3) arranged to be fitted in the pyrotechnical countermeasure dispenser (2), and a pyrotechnical countermeasure dispenser control unit (4) configured for controlling the dispensing of the pyrotechnical countermeasure from the pyrotechnical countermeasure cartridge (3), **characterized in that** the dispenser control unit further comprises a recoil-sensing device (5), wherein the dispenser control unit upon activation of a pyrotechnical countermeasure dispensing command is configured for monitoring the sensing of a recoil signal (8) from the recoil-sensing device (5) during a monitoring window (6), determining that a dispensing of the pyrotechnical countermeasure has occurred upon detection of the recoil signal (8) exceeding a recoil detection threshold value (9) during the monitoring window (6), and determining that a misfire of the pyrotechnical countermeasure has occurred if no detection of the recoil signal (8) is made during the monitoring window (6).

6. Pyrotechnical countermeasure dispenser system (1) according to claim 5, wherein the recoil-sensing device (5) is a load cell or a three-axis accelerometer.

7. Pyrotechnical countermeasure dispenser system (1) according to claim 5 or 6, wherein the dispenser control unit comprises two or more recoil-sensing devices (5).

8. Pyrotechnical countermeasure dispenser system (1) according to any one of claims 5-7, wherein the pyrotechnical countermeasure dispenser system (1) is arranged in a platform, wherein the pyrotechnical countermeasure dispenser control unit (4) is configured for:
- measuring a noise signal value of a background noise signal from the platform,
- adjusting the recoil detection threshold value (9) to a predetermined value above the noise signal value of the background noise signal from the platform.

9. Pyrotechnical countermeasure dispenser system (1) according to any one of claims 5-8, wherein the pyrotechnical countermeasure dispenser control unit (4) is configured for:
- preventing a subsequent dispensing of a further pyrotechnical countermeasure from the pyrotechnical countermeasure dispenser (2) until a recoil signal (8) exceeding a recoil detection threshold value (9) is detected.

10. Pyrotechnical countermeasure dispenser system (1) according to any one of claims 5-9, wherein the pyrotechnical countermeasure dispenser control unit (4) is configured for:
- measuring vibrations continuously with the recoil-sensing device (5) to monitor the health status of the pyrotechnical countermeasure dispenser (2) and other platform systems.

11. Platform comprising a pyrotechnical countermeasure dispenser system (1) according to any one of claims 5-10.

12. Platform according to claim 11, wherein the platform is an aircraft such as an airplane or a helicopter.

## Patentansprüche

1. Verfahren zur Ausgabeerkennung einer pyrotechnischen Gegenmaßnahme in einem Abgabesystem (1) für pyrotechnische Gegenmaßnahmen, wobei das Abgabesystem (1) für pyrotechnische Gegenmaßnahmen eine Abgabeeinheit (2) für pyrotechnische Gegenmaßnahmen, mindestens eine Kartusche (3) für pyrotechnische Gegenmaßnahmen, die dazu ausgelegt ist, in die Abgabeeinheit (2) für pyrotechnische Gegenmaßnahmen zu passen, und eine Steuereinheit (4) der Abgabeeinheit für pyrotechnische Gegenmaßnahmen, die dazu konfiguriert ist, die Abgabe der pyrotechnischen Gegenmaßnahme von der Kartusche (3) für pyrotechnische Gegenmaßnahmen zu steuern, umfasst, wobei das Verfahren Folgendes umfasst:
- Versehen der Steuereinheit (4) der Abgabeeinheit für pyrotechnische Gegenmaßnahmen mit einer Rückstoßerfassungsvorrichtung (5),
wobei bei Aktivierung eines Befehls zur Abgabe einer pyrotechnischen Gegenmaßnahme
- die Erfassung eines Rückstoßsignals (8) von der Rückstoßerfassungseinheit (5) während eines Überwachungsfensters (6) überwacht wird,
- bestimmt wird, dass eine Abgabe der pyrotechnischen Gegenmaßnahme von der Kartusche (3) für pyrotechnische Gegenmaßnahmen aufgetreten ist, wenn erkannt wird, dass das Rückstoßsignal (8) einen Rückstoßerkennungsschwellenwert (9) während des Überwachungsfensters (6) überschreitet,
- bestimmt wird, dass eine Fehlzündung der pyrotechnischen Gegenmaßnahme aufgetreten ist, wenn kein Rückstoßsignal (8) während des Überwachungsfensters (6) erkannt wird.

2. Verfahren nach Anspruch 1, wobei das Abgabesystem (1) für pyrotechnische Gegenmaßnahmen auf einer Plattform angeordnet ist, wobei das Verfahren Folgendes umfasst:
- Messen eines Geräuschsignalwerts eines Hintergrundgeräuschsignals von der Plattform,
- Einstellen des Rückstoßerkennungsschwellenwerts (9) auf einen vorbestimmten Wert über dem Geräuschsignalwert des Hintergrundgeräuschsignals von der Plattform.

3. Verfahren nach Anspruch 1 oder 2, wobei das Verfahren Folgendes umfasst:
- Verhindern einer anschließenden Abgabe einer weiteren pyrotechnischen Gegenmaßnahme von der Abgabeeinheit (2) für pyrotechnische Gegenmaßnahmen, bis erkannt wird, dass ein Rückstoßsignal (8) einen Rückstoßerkennungsschwellenwert (9) überschreitet.

4. Verfahren nach einem der vorhergehenden Ansprüche, wobei das Verfahren Folgendes umfasst:
- kontinuierliches Messen von Schwingungen mit der Rückstoßerfassungsvorrichtung (5), um den Zustand der Abgabeeinheit (2) für pyrotechnische Gegenmaßnahmen und anderer Plattformsysteme zu überwachen.

5. Abgabesystem (1) für pyrotechnische Gegenmaßnahmen, umfassend eine Abgabeeinheit (2) für pyrotechnische Gegenmaßnahmen, mindestens eine Kartusche (3) für pyrotechnische Gegenmaßnahmen, die dazu ausgelegt ist, in die Abgabeeinheit (2) für pyrotechnische Gegenmaßnahmen zu passen, und eine Steuereinheit (4) der Abgabeeinheit für pyrotechnische Gegenmaßnahmen, die dazu konfiguriert ist, die Abgabe der pyrotechnischen Gegenmaßnahme von der Kartusche (3) für pyrotechnische Gegenmaßnahmen zu steuern, **dadurch gekennzeichnet, dass** die Steuereinheit der Abgabeeinheit ferner eine Rückstoßerfassungsvorrichtung (5) umfasst, wobei die Steuereinheit der Abgabeeinheit bei Aktivierung eines Befehls zur Abgabe einer pyrotechnischen Gegenmaßnahme dazu konfiguriert ist, die Erfassung eines Rückstoßsignals (8) von der Rückstoßerfassungsvorrichtung (5) während eines Überwachungsfensters (6) zu überwachen, zu bestimmen, dass eine Abgabe der pyrotechnischen Gegenmaßnahme aufgetreten ist, wenn erkannt wird, dass das Rückstoßsignal (8) einen Rückstoßerkennungsschwellenwert (9) während des Überwachungsfensters (6) überschreitet, und bestimmt wird, dass eine Fehlzündung der pyrotechnischen Gegenmaßnahme aufgetreten ist, wenn kein Rückstoßsignal (8) während des Überwachungsfensters (6) erkannt wird.

6. Abgabesystem (1) für pyrotechnische Gegenmaßnahmen nach Anspruch 5, wobei die Rückstoßerfassungsvorrichtung (5) eine Wägezelle oder ein dreiachsiger Beschleunigungsmesser ist.

7. Abgabesystem (1) für pyrotechnische Gegenmaßnahmen nach Anspruch 5 oder 6, wobei die Steuereinheit der Abgabeeinheit zwei oder mehr Rückstoßerfassungsvorrichtungen (5) umfasst.

8. Abgabesystem (1) für pyrotechnische Gegenmaßnahmen nach einem der Ansprüche 5-7, wobei das Abgabesystem (1) für pyrotechnische Gegenmaßnahmen auf einer Plattform angeordnet ist, wobei die Steuereinheit (4) der Abgabeeinheit für pyrotechnische Gegenmaßnahmen zu Folgendem konfiguriert ist:
- Messen eines Geräuschsignalwerts eines Hintergrundgeräuschsignals von der Plattform,
- Einstellen des Rückstoßerkennungsschwellenwerts (9) auf einen vorbestimmten Wert über dem Geräuschsignalwert des Hintergrundgeräuschsignals von der Plattform.

9. Abgabesystem (1) für pyrotechnische Gegenmaßnahmen nach einem der Ansprüche 5-8, wobei die Steuereinheit (4) der Abgabeeinheit für pyrotechnische Gegenmaßnahmen zu Folgendem konfiguriert ist:
- Verhindern einer anschließenden Abgabe einer weiteren pyrotechnischen Gegenmaßnahme von der Abgabeeinheit (2) für pyrotechnische Gegenmaßnahmen, bis erkannt wird, dass ein Rückstoßsignal (8) einen Rückstoßerkennungsschwellenwert (9) überschreitet.

10. Abgabesystem (1) für pyrotechnische Gegenmaßnahmen nach einem der Ansprüche 5-9, wobei die Steuereinheit (4) der Abgabeeinheit für pyrotechnische Gegenmaßnahmen zu Folgendem konfiguriert ist:
- kontinuierliches Messen von Schwingungen mit der Rückstoßerfassungsvorrichtung (5), um den Zustand der Abgabeeinheit (2) für pyrotechnische Gegenmaßnahmen und anderer Plattformsysteme zu überwachen.

11. Plattform, umfassend ein Abgabesystem (1) für pyrotechnische Gegenmaßnahmen nach einem der Ansprüche 5-10.

12. Plattform nach Anspruch 11, wobei die Plattform ein Luftfahrzeug ist, wie etwa ein Flugzeug oder ein Helikopter.

## Revendications

1. Procédé de détection de distribution d'une contre-mesure pyrotechnique dans un système de distribution de contre-mesure pyrotechnique (1), dans lequel le système de distribution de contre-mesure pyrotechnique (1) comprend un distributeur de contre-mesure pyrotechnique (2), au moins une cartouche de contre-mesure pyrotechnique (3) agencée pour être insérée dans le distributeur de contre-mesure pyrotechnique (2), et une unité de commande de distributeur de contre-mesure pyrotechnique (4) configurée pour commander la distribution de la contre-mesure pyrotechnique à partir de la cartouche de contre-mesure pyrotechnique (3), dans lequel le procédé comprend :
- la fourniture de l'unité de commande de distributeur de contre-mesure pyrotechnique (4) d'un dispositif de détection de recul (5), dans lequel, lors de l'activation d'une commande de distribution de contre-mesure pyrotechnique,
- la surveillance de la détection d'un signal de recul (8) provenant du dispositif de détection de recul (5) pendant une fenêtre de surveillance (6),
- la détermination qu'une distribution de la contre-mesure pyrotechnique à partir de la cartouche de contre-mesure pyrotechnique (3) a eu lieu lors de la détection du signal de recul (8) dépassant une valeur seuil de détection de recul (9) pendant la fenêtre de surveillance (6),
- la détermination qu'un raté de tir de la contre-mesure pyrotechnique s'est produit en l'absence de détection du signal de recul (8) pendant la fenêtre de surveillance (6).

2. Procédé selon la revendication 1, dans lequel le système de distribution de contre-mesure pyrotechnique (1) est agencé sur une plateforme, le procédé comprenant :
- la mesure de la valeur de signal de bruit d'un signal de bruit de fond provenant de la plateforme,
- l'ajustement de la valeur de seuil de détection de recul (9) à une valeur prédéterminée au-dessus de la valeur de signal de bruit du signal de bruit de fond de la plateforme.

3. Procédé selon la revendication 1 ou 2, dans lequel le procédé comprend :
- l'empêchement de la distribution ultérieure d'une autre contre-mesure pyrotechnique à partir du distributeur de contre-mesures pyrotechniques (2) jusqu'à ce qu'un signal de recul (8) dépassant une valeur de seuil de détection de recul (9) soit détecté.

4. Procédé selon l'une quelconque des revendications précédentes, dans lequel le procédé comprend :
- la mesure des vibrations en continu avec le dispositif de détection de recul (5) pour surveiller l'état de santé du distributeur de contre-mesure pyrotechnique (2) et d'autres systèmes de plateforme.

5. Système de distribution de contre-mesure pyrotechnique (1) comprenant un distributeur de contre-mesure pyrotechnique (2), au moins une cartouche de contre-mesure pyrotechnique (3) agencée pour être insérée dans le distributeur de contre-mesure pyrotechnique (2), et une unité de commande de distributeur de contre-mesure pyrotechnique (4) configurée pour commander la distribution de la contre-mesure pyrotechnique à partir de la cartouche (3), **caractérisé en ce que** l'unité de commande de distributeur comprend en outre un dispositif de détection de recul (5), dans lequel, lors de l'activation d'une commande de distribution de contre-mesure pyrotechnique, l'unité de commande de distributeur surveille la détection d'un signal de recul (8) provenant du dispositif de détection de recul (5) pendant une fenêtre de surveillance (6), déterminant qu'une distribution de contre-mesure pyrotechnique a eu lieu lorsque le signal de recul (8) dépasse une valeur de seuil de détection de recul (9) pendant la fenêtre de surveillance (6), et déterminant qu'un raté de tir de la contre-mesure pyrotechnique s'est produit en l'absence de détection d'un signal de recul (8) pendant la fenêtre de surveillance (6).

6. Système de distribution de contre-mesure pyrotechnique (1) selon la revendication 5, dans lequel le dispositif de détection de recul (5) est une cellule de charge ou un accéléromètre à trois axes.

7. Système de distribution de contre-mesure pyrotechnique (1) selon la revendication 5 ou 6, dans lequel l'unité de commande de distributeur comprend deux ou plusieurs dispositifs de détection de recul (5).

8. Système de distribution de contre-mesure pyrotechnique (1) selon l'une quelconque des revendications 5 à 7, dans lequel le système de distribution de contre-mesure pyrotechnique (1) est agencé sur une plateforme, dans lequel l'unité de commande de distributeur de contre-mesure pyrotechnique (4) est configurée pour :
- mesurer une valeur de signal de bruit d'un signal de bruit de fond provenant de la plateforme,
- ajuster la valeur de seuil de détection de recul (9) à une valeur prédéterminée au-dessus de la valeur de signal de bruit du signal de bruit de fond de la plateforme.

9. Système de distribution de contre-mesure pyrotechnique (1) selon l'une quelconque des revendications 5 à 8, dans lequel l'unité de commande de distributeur de contre-mesure pyrotechnique (4) est configurée pour :
- empêcher la distribution ultérieure d'une autre contre-mesure pyrotechnique à partir du distributeur de contre-mesure pyrotechnique (2) jusqu'à ce qu'un signal de recul (8) dépassant une valeur de seuil de détection de recul (9) soit détecté.

10. Système de distribution de contre-mesure pyrotechnique (1) selon l'une quelconque des revendications 5 à 9, dans lequel l'unité de commande de distributeur de contre-mesure pyrotechnique (4) est configurée pour :
- mesurer les vibrations en continu avec le dispositif de détection de recul (5) pour surveiller l'état de santé du distributeur de contre-mesure pyrotechnique (2) et d'autres systèmes de plateforme.

11. Plateforme comprenant un système de distribution de contre-mesure pyrotechnique (1) selon l'une quelconque des revendications 5 à 10.

12. Plateforme selon la revendication 11, dans laquelle la plateforme est un aéronef tel qu'un avion ou un hélicoptère.
